Europäisches Patentamt

European Patent Office

Office européen des brevets

(11) Publication number: **0 090 655**
**A1**

## EUROPEAN PATENT APPLICATION

(21) Application number: **83301779.1**

(22) Date of filing: **30.03.83**

(51) Int. Cl.³: **B 01 D 47/06**, F 28 C 1/02

(30) Priority: **30.03.82 GB 8209345**

(43) Date of publication of application: **05.10.83**
**Bulletin 83/40**

(84) Designated Contracting States: **AT BE CH DE FR GB IT LI LU NL SE**

(71) Applicant: **JOHN THURLEY LIMITED, Ripon Road Harrogate, North Yorkshire HG1 2BU (GB)**

(72) Inventor: **Thurley, John, 34 Cavendish Avenue, Harrogate North Yorkshire (GB)**
Inventor: **Arnold, Gerald Desmond, 50 Long Lane Clayton West, Huddersfield West Yorkshire (GB)**

(74) Representative: **Harrison. Michael Robert et al, URQUHART-DYKES & LORD 11th Floor Tower House Merrion Way, Leeds LS2 8PB West Yorkshire (GB)**

(54) **Treatment of exhaust gases.**

(57) A method and apparatus for the treatment of relevant gases from industrial processes by contacting the gases with a liquid, preferably water, the method involving passing said gases up an upwardly extending duct (3), and passing the liquid down said duct in the form of a spray or mist, the liquid entering the duct at a plurality of vertically spaced apart portions along the duct (17, 25, 33).

- 1 -

## TREATMENT OF EXHAUST GASES

The present invention relates to the treatment of exhaust gases, especially to treatment of exhaust gases in vertical columns.

There are several industrial processes, where an exhaust gas is produced. The gas, or gases, may contain desirable by-products. The gases, which may be at an elevated temperature, are generally vented to the atmosphere by means of a vertical exhaust stack. However, it may be desirable to cool the gases before they leave the stack, to remove components from the gas and/or so that the gas leaving the stack is nearer the ambient atmosphere temperature, or so that the heat from the gas may be used.

This may be achieved by spraying relatively cool liquid into an upper part of the stack, so that the droplets of liquid contact the exhaust gases and a heat exchange takes place, so that the gases are cooled, and the liquid heated.

The spray is situated in the upper part of the stack so that the liquid can travel virtually the whole length of the stack in order to obtain as high a level of heat exchange as possible.

At the bottom of the stack the liquid, together with any valuable by-products condensed from the gases, may be used as a heat exchange medium or directly used in a further process if required. The use of small droplets of liquid in the form of a spray has been found to be more efficient for the transfer of heat from the gases to the liquid than the use of cooling liquid in bulk.

According to the present invention there is provided a method of treatment of exhaust gases by contacting said gases with a liquid, the method comprising passing said exhaust gases up an upwardly extending duct, and passing the liquid down said duct in the form of a spray or mist, said liquid entering the duct at a plurality of vertically spaced apart positions along the duct.

Preferably said duct is an exhaust stack. Alternatively said duct is a vessel within which condensation of vapour carried by the warm gases is to be condensed.

Preferably said vertically separated entrance points are supplied with liquid from a common liquid supply line. Alternatively, the liquid is supplied to the uppermost entrance point, caught further down the duct and then passed through the vertically adjacent entrance point, the cycle being repeated along the length of the duct as many times as required.

Preferably the liquid is water.

It has now been found that the efficiency of spray contacting systems decrease fairly rapidly with the distance of the liquid from the spray producing means. This may possibly be because of agglomeration of a plurality of water droplets forming a larger droplet which is a less efficient heat transfer medium, or for other reasons. Therefore, the present invention provides a method for achieving more efficient heat transfer from a gas to the liquid by causing the liquid to be passed through a plurality of, for instance, spray heads at vertically spaced positions along the duct to minimise the loss of efficiency of known systems.

The present invention also provides apparatus for the treatment of exhaust gases by contacting said gases with a liquid, the apparatus comprising an upwardly extending duct along which the exhaust gases may be passed, and means for spraying a liquid down said duct, said means being disposed at vertically separated positions along the duct.

The present invention may be advantageously used wherever conventional sprays are at present used, for instance, in the cooling of exhaust gases from immersed combustion heaters before the venting of said gases to the atmosphere, or in direct contact heat exchanges.

Embodiments of the present invention will now be described, by way of example only, and with reference to the accompanying drawings, in which:-

Figure 1 is a diagrammatic representation of a first embodiment of the present invention; and

Figure 2 is a diagrammatic representation of a second embodiment of the present invention.

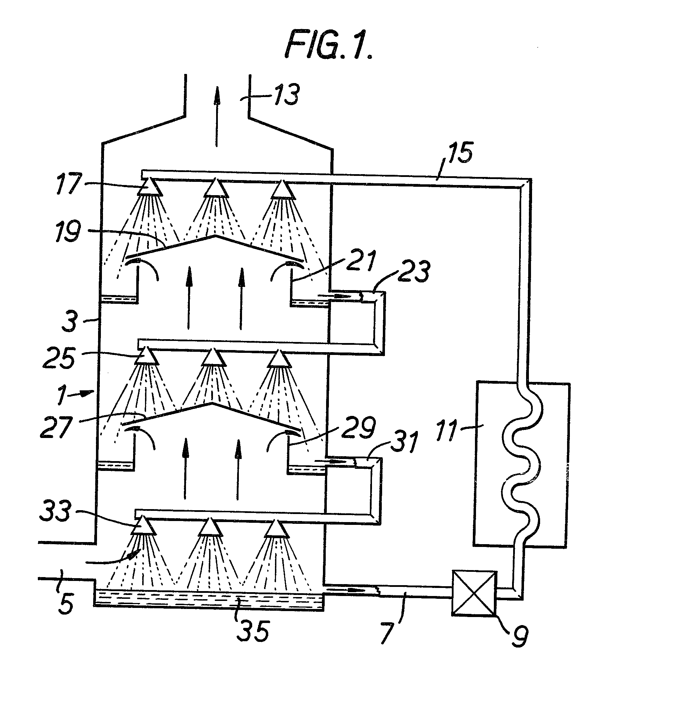

Referring to Figure 1 of the accompanying drawings, apparatus in accordance with the present invention, indicated generally by 1, comprises the exhaust stack 3 of, for example, immersed combustion apparatus. The exhaust gases are delivered to the bottom of the exhaust stack by means of an inlet pipe 5. The gases then rise up the stack 3 and eventually are vented to the atmosphere through an opening at the top of the stack 13.

However it may be desired to increase the efficiency of the entire operating system by removing as much as possible of the heat from the exhaust gases before venting them to the atmosphere. Additionally, it may be desired to remove vapourised liquids from the warm gases by means of condensation within the stack. Accordingly, a supply pipe 15 enters the stack 3 near the top thereof and ends in a plurality of sprayer heads 17 arranged so as to spray the liquid down the duct. In this embodiment the liquid is water, although in alternative embodiments it may be any suitable liquid. The water is of a lower temperature than that of the exhaust gases and so coming into contact with the gases in the form of a spray has the effect of both cooling the gases and heating the water. However, the heat exchange takes place most efficiently within a relatively short distance of the sprayer heads 17. Therefore, the water spray is defected by means of a conical deflector 19 whose axis lies on the central axis of the stack 3, into a substantially annular container fixed to the inner surface of the stack 3.

The water collected in the annular container 21 is then removed by means of pipe-line 23 by a pump (not shown) and then re-enters the stack 3 to be sprayed again through spray heads 25. The spray is again deflected by a deflector 27 into an annular container 29, whence it is removed by pipe-line 31 and supplied under pressure to the third set of sprayer heads 33.

At the bottom of the stack 3 the water, together with any liquids condensed from vapour carried by the exhaust gases collects in the bottom of the stack 35. The warmed liquid is then removed by means of outlet pipe 7 and pump 9 and passed through a suitable heat exchanger 11. The heat so produced may be used for any suitable purpose such as, the heating of liquid natural gas or other cryogenic fluids or the heating of water for use in a central heating system. The water having passed through heat exchange means 11 is substantially cooler than that at the bottom of the stack 3 and also cooler than the exhaust gases. It is therefore passed upwardly along pipe-line 15 and re-enters the stack 3 so as to be sprayed from the first sprayer head 17 at the top of the stack 3.

It has been found that the distance between the adjacent sets of sprayer heads should be as close as possible, but that a suitable distance is approximately 12 inches.

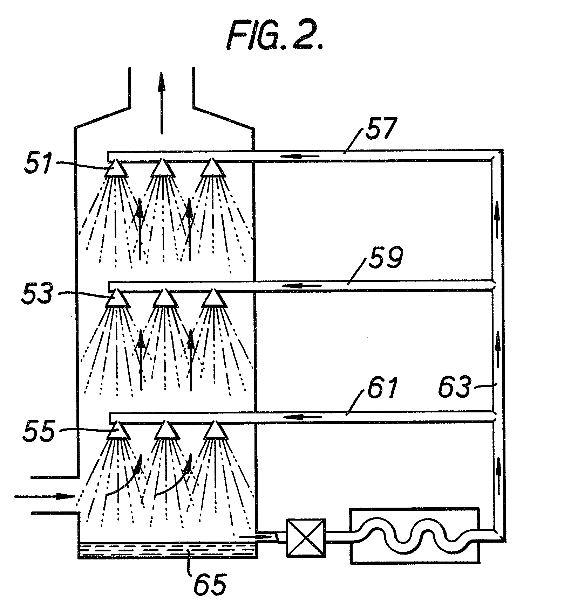

An alternative embodiment of the present invention, diagrammatically represented in Figure 2 of the present invention, is essentially similar to the embodiment described with reference to Figure 1, with the exception that each vertically separated group of sprayer heads 51, 53 and 55, is supplied by pipes 57, 59 and 61 respecitvely, from a common supply line 63. This obviates the need for the deflectors and / catching means.

The water, together with possible components of the gases extracted by condensation, is removed from the bottom 65 of the stack 67 and processed as required, for instance, to extract the components, or to extract the heat from the water so that it can be recycled into supply line 63.

Apparatus in accordance with the present invention thus has several advantages over comparable known systems, in that there is a relatively low pressure required to pass the gas up the stack against the flow of the liquid, and there is a higher degree of contact between the liquid and the gas leading, in the embodiment described herein, to a relatively large increase in temperature of the water. It is therefore possible for a system as including apparatus in accordance with the present invention to be substantially more efficient than conventional systems.

CLAIMS:

1. A method of treatment of exhaust gases by contacting said gases with a liquid characterised in that the method comprises passing said exhaust gases up an upwardly extending duct, and passing the liquid down said duct in the form of a spray or mist, said liquid entering the duct at a plurality of vertically spaced apart positions along the duct.

2. A method according to claim 1 characterised in that said duct is an exhaust stack.

3. A method according to claim 1 or claim 2 characterised in that said vertically separated entrance points are supplied with liquid from a common liquid supply line.

4. A method according to claim 1 or claim 2 characterised in that the liquid is supplied to the uppermost entrance point, collected further down the duct and then passed through the vertically adjacent entrance point, the cycle being repeated along the length of the duct as many times as required.

5. Apparatus for the treatment of exhaust gases by contacting said gases with a liquid characterised in that the apparatus comprises an upwardly extending duct along which the exhaust gases may be passed, and means for spraying a liquid down said duct, said means being disposed at vertically separated positions along the duct.

FIG.1.

FIG.2.

European Patent Office

**EUROPEAN SEARCH REPORT**

Application number

EP 83 30 1779

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | DE-A-2 538 187 (MITANI et al.)<br>* Page 1, paragraph 1,2; page 4, last paragraph - page 5, line 3; figure 2 * | 1-3,5 | B 01 D 47/06<br>F 28 C 1/02 |
| X | DE-A-2 556 304 (H. HOLTER)<br>* Claim 1, figure * | 1-3,5 | |
| X | US-A-3 532 595 (B. E. ARNESJO et al.)<br>* Column 3, line 60 - column 4, line 50 * | 1,2,4,5 | |
| X | US-A-3 895 926 (B. J. LERNER)<br>* Column 2, line 20 - column 3, line 10; column 3, line 49 - column 4, line 58 * | 1,2,5 | |
| A | US-A-2 972 393 (S. B. BUSH)<br>* Column 2, lines 40-49; column 3, lines 22-40 * | 1 | TECHNICAL FIELDS SEARCHED (Int. Cl. 3)<br><br>B 01 D<br>F 28 C |
| A | FR-A-2 484 070 (L'INDUSTRIELLE DE CHAUFFAGE)<br>* Page 5, lines 1-26 * | 1 | |
| A | GB-A-1 082 511 (ASSOCIATED ELECTRICAL INDUSTRIES)<br>* Page 3, lines 92-106 * | 1 | |

The present search report has been drawn up for all claims

| Place of search | Date of completion of the search | Examiner |
|---|---|---|
| THE HAGUE | 06-06-1983 | TEPLY J. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO Form 1503 03.82